# FASCICULE DE BREVET EUROPEEN

(11) **EP 0 658 740 B1**
(45) Date de publication et mention de la délivrance du brevet: **04.03.1998**
(21) Numéro de dépôt: 94402755.6
(22) Date de dépôt: 01.12.1994
(51) Int. Cl.: G01B 7/31, G01B 21/24

(54) **Procédé de contrôle et de réglage de la géométrie de la ligne d'arbres d'un groupe hydroélectrique à axe vertical**
Verfahren zur Überprüfung der Geometrie und zur Aufreihung von Wellen in einer hydroelektrischer Gruppe mit vertikaler Achse
Method for checking and adjustment of the geometry of a line of axles in an hydroelectric group having a vertical axis

(30) Priorité: 17.12.1993 FR 9315247
(43) Date de publication de la demande: 21.06.1995
(73) Titulaire: ELECTRICITE DE FRANCE Service National, 75008 Paris (FR)
(72) Inventeur: Francois, Emmanuel, F-38100 Grenoble (FR)
(74) Mandataire: Polus, Camille

(56) Documents cités:
- EP-A- 0 405 777
- WO-A-92/08962
- DE-A- 3 911 307
- US-A- 4 538 455
- US-A- 5 056 237
- ISA TRANSACTIONS vol. 12, no. 4, 1973, pages 299 - 309 N.LUKACS ; C.P.REID 'proximity probe applications for trouble-shooting rotating equipment problems'
- PATENT ABSTRACTS OF JAPAN vol. 11 no. 339 (M-639) ,6 Novembre 1987 & JP-A-62 121869 (TOSHIBA CORP) 3 Juin 1987,

## Description

La présente invention concerne les groupes hydroélectriques à axe vertical qui constituent un groupe formé d'un alternateur/moteur électrique et d'une turbine hydraulique et dont la hauteur peut aller jusqu'à quinze mètres, voire plus.

De tels groupes hydroélectriques peuvent comporter un seul arbre vertical ou plusieurs, par exemple trois.

Un groupe hydroélectrique peut être considéré comme un pendule rigide articulé autour d'un support à pivot. Ce pivot peut être disposé au dessus de l'alternateur et il s'agit alors d'un groupe de type suspendu ou entre l'alternateur et la turbine auquel cas il s'agit d'un groupe du type parapluie. Ce pivot doit supporter le poids de l'ensemble du groupe auquel peut s'ajouter une poussée hydraulique. Suivant le type de la turbine (Kaplan, hélices, Francis, Pelton), cette poussée hydraulique peut être :
- inexistante ou très faible (Pelton) ;
- moyenne, c'est-à-dire inférieure au poids du groupe (Francis) ; ou
- de l'ordure du poids du groupe (Kaplan, hélices).

Le remontage de la ligne d'arbres d'un tel groupe est très délicat car il est indispensable d'assurer un bon alignement et une bonne coaxialité des parties fixes et tournantes. Il faut alors contrôler et régler la géométrie de la ligne d'arbres par l'alignement des arbres entre eux, la perpendicularité de la glace (face d'appui tournante) avec l'axe de la ligne d'arbres et l'alignement des paliers.

Actuellement, on utilise essentiellement deux méthodes, à savoir la technique des fils à plomb et l'utilisation d'un niveau micrométrique. Ces deux méthodes ne peuvent pas toujours être correctement appliquées si le rotor de l'alternateur et/ou moteur n'est pas totalement déposé.

Une troisième méthode connue, décrite dans "Patent Abstract of Japan Vol.ll n°339 & JP-A-62 121 859" utilise des mesures dans un plan horizontal perpendiculaire à un arbre à contrôler afin de recevoir ce dernier.

Dans la méthode des fils à plomb, le plus simple est d'utiliser quatre fils à plomb fixés sous le croisillon de l'alternateur et/ou moteur en quatre points tous les 90 degrés. On choisit plusieurs plans horizontaux, dans lesquels on mesure la distance entre l'arbre et chacun des fils à plomb.

Si le diamètre varie le long de l'arbre, on fait dans chaque plan retenu une mesure du diamètre et l'on corrige ensuite la distance mesurée en fonction de la valeur retrouvée.

Le fil à plomb métallique doit être parfaitement calibré. Sur les groups modernes il est souvent impossible de tendre quatre fils à plomb extérieurs à l'arbre. On se contente alors d'utiliser un seul fil à plomb passant dans le forage de l'arbre (à condition qu'il existe). Il n'est plus possible alors d'effectuer des mesures intermédiaires. Suivant les valeurs respectives des distances séparant les plans de mesure, on pourra connaître la verticalité de l'arbre et ses déformations éventuelles.

Les fils à plomb doivent être tendus à la limite de la rupture. Pour éviter qu'ils ne se balancent pendant la mesure, le poids qui sert à tendre vient tremper dans un récipient contenant de l'huile. La mesure de distance arbre-fil à plomb peut être faite avec une pige électrique en veillant à ce que le micromètre soit bien perpendiculaire à l'arbre.

Comme on peut le voir, la méthode est simple dans le principe, mais elle nécessite une longue préparation. Un grand nombre de machines ne peuvent cependant être contrôlées par cette méthode.

Si l'on utilise un niveau micrométrique, une première méthode sur laquelle on n'insiste pas, consiste, afin de mesurer la verticalité d'un arbre, à mesurer l'horizontalité de sa face d'appui du plateau d'accouplement. Cette méthode exige une parfaite géométrie de l'arbre et ne permet pas de déceler une déformation de celui-ci.

Une seconde méthode consiste à faire tourner le support du niveau micrométrique autour de l'arbre restant fixe.

Il n'est pas indispensable que le support de niveau soit perpendiculaire à l'arbre, il suffit qu'il se retrouve toujours dans la même position angulaire par rapport à lui. Le support proposé par l'abbé CAYERE, répond parfaitement à cette définition, mais il nécessite la confection d'une bague en deux pièces s'adaptant parfaitement au diamètre de l'arbre.

L'arbre étant à l'arrêt, on fait, dans plusieurs plans horizontaux choisis par exemple au voisinage des paliers et des accouplements, des mesures en faisant tourner le support. Tous les points de même nom des divers plans horizontaux sont dans le même plan vertical. Suivant les valeurs respectives de ces mesures on pourra déterminer l'inclinaison de la ligne d'arbres, la rectitude ou la flexion d'arbre.

La méthode présentée ici nécessite d'être bien maîtrisée et demande une grande rigueur. Une bague en deux parties, parfaitement ajustée, doit être réalisée pour chaque plan de mesures. On constate également qu'il n'est pas toujours possible de choisir ces plans de façon optimum. L'outillage étant encombrant, il n'est pas toujours possible de l'utiliser dans des zones que préconise la théorie.

Il est donc souhaitable de fournir un procédé qui permette de réaliser plus facilement et plus rapidement le contrôle et le réglage éventuel d'une ligne d'arbres verticale. Un tel procédé devrait permettre d'améliorer le vieillissement et la tenue à la fatigue des groupes hydroélectriques et de réduire l'indisponibilité liée à un arrêt pour entretien.

La présente invention se propose de fournir un procédé de contrôle et de réglage d'une ligne d'arbres qui peut être facilement mis en oeuvre en un temps réduit en limitant l'encombrement du dispositif de mesure.

A cet effet, l'invention a pour objet un procédé de contrôle et de réglage de la géométrie de la ligne d'arbres d'un groupe hydroélectrique à axe vertical, ledit groupe étant supporté par un pivot, caractérisé en ce que:
- on démonte les paliers de la ligne d'arbres de manière à permettre une rotation libre de la ligne d'arbres ;
- pour chaque arbre, on détermine, dans deux plans horizontaux différents, la position du centre de l'arbre dans le plan considéré pour plusieurs positions angulaires de l'arbre, les positions angulaires respectives de l'arbre étant toutes alignées dans un même plan vertical pour tous les plans de mesure. ;
- on détermine, dans chaque plan, la trajectoire suivie par le centre de l'arbre située dans ce plan ;
- on détermine, par calcul, l'enveloppe des trajectoires du centre de l'arbre sur toute la longueur de ce dernier ; et
- on calcule les défauts de l'arbre et, éventuellement, les calages à réaliser.

La mesure de la position du centre de l'arbre peut être réalisée avec des appareils de mesure fixés sur la paroi de l'enceinte dans laquelle est disposé le groupe, ce qui limite l'encombrement et permet de faire des mesures des plans les plus favorables.

Selon une autre caractéristique de l'invention, les deux plans de mesures sont séparés par une distance égale à au moins 30% de la longueur de l'arbre.

Cette disposition permet d'avoir des plans de mesures bien répartis et pas trop proches l'un de l'autre.

Selon encore une autre caractéristique de l'invention, on mesure la position du centre de l'arbre pour huit positions angulaires de ce dernier.

Le nombre minimal de mesures est égal à trois, mais on a constaté que huit mesures sont suffisantes pour obtenir une bonne précision.

Avantageusement, au moins l'un des plans de mesure est disposé au niveau de la soie d'un palier et/ou d'un plateau d'accouplement.

Cette disposition permet d'obtenir une meilleure précision.

En effet, tous les plans de mesures doivent passer par des surfaces de bonne qualité géométrique ; par conséquent, il est avantageux d'utiliser en priorité les soies de paliers et les plateaux d'accouplement.

Selon une autre caractéristique de l'invention, on fait tourner lentement la ligne d'arbres et les mesures sont réalisées pendant la rotation de manière synchrone pour les différents plans de mesure ; l'arbre peut être entraîné manuellement en rotation.

Selon encore une autre caractéristique de l'invention, on désaccouple les arbres et l'on effectue le contrôle et le réglage de l'arbre supérieur, on monte l'arbre suivant sur l'arbre supérieur et l'on effectue le contrôle et le réglage de l'ensemble, ces opérations étant répétées jusqu'au contrôle et réglage de l'ensemble des arbres de la ligne d'arbres.

Selon encore une autre caractéristique de l'invention, la mesure de la position du centre de l'arbre est réalisée au moyen de deux comparateurs disposés par rapport à l'arbre avec un écartement angulaire de 90°.

Grâce à cette disposition, on peut déterminer avec une bonne précision la position du centre de rotation de l'arbre dans le plan considéré.

Selon encore une autre caractéristique, pour chaque plan de mesure, les deux comparateurs sont reliés à un dispositif électronique de mémorisation et de commande des mesures et chacun desdits dispositifs électroniques de mémorisation est commandé par un dispositif de synchronisation comportant un dispositif de détection de la position angulaire de l'arbre.

D'autres caractéristiques et avantages de l'invention ressortiront de la description qui suit d'un exemple de réalisation de l'invention, faite en se référant aux dessins annexés sur lesquels :
- la figure 1 est une représentation schématique d'un groupe turboalternateur du type suspendu ;
- la figure 2 représente schématiquement le dispositif de mesure utilisé ;
- la figure 3 représente les différentes positions calculées du centre de rotation de l'arbre pour un plan de mesure ;
- la figure 4 est un exemple de courbe enveloppe pour un seul arbre ;
- la figure 5 est un exemple de courbe enveloppe pour l'ensemble d'une ligne d'arbres ;
- la figure 6 est une description sommaire du traitement réalisé sur les mesures effectuées ; et
- la figure 7 illustre les opérations de calage.

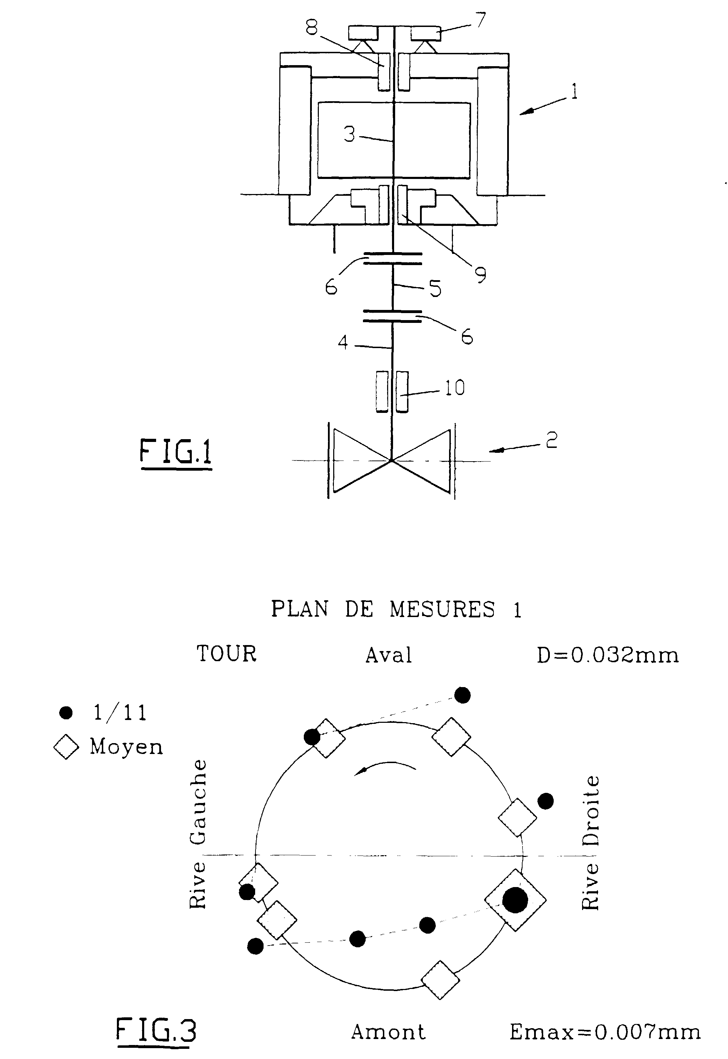

On voit sur la figure 1 un groupe hydroélectrique vertical du type suspendu ; il comporte un alternateur 1 et une turbine 2. La partie tournante de l'alternateur est fixée sur un premier arbre supérieur 3, la turbine 2 est fixée sur un arbre inférieur 4. Ces deux arbres supérieur 3 et inférieur 4 sont reliés par un arbre intermédiaire 5. Les différents arbres sont accouplés au moyen de plateaux de raccordement 6.

L'ensemble des masses tournantes du groupe est supporté par un pivot 7 disposé à la partie supérieure de la ligne d'arbres ; il s'agit donc d'un turboalternateur de type suspendu. L'arbre supérieur de l'alternateur comporte deux paliers 8 et 9 et l'arbre inférieur 4 de la turbine comporte un palier 10.

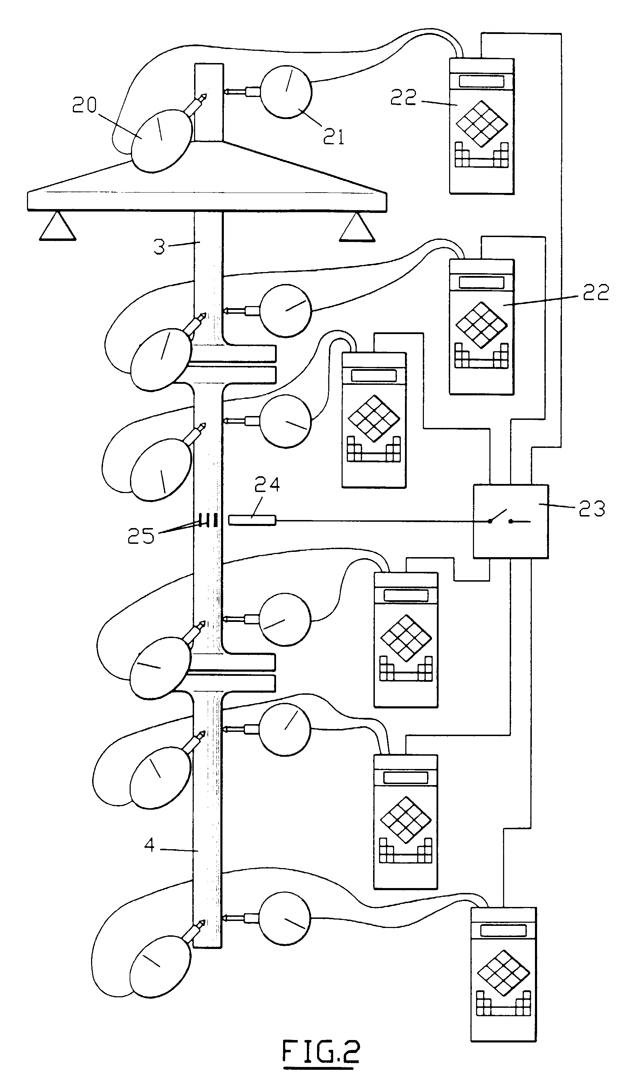

La figure 2 représente l'ensemble du dispositif de mesure utilisé pour le procédé selon l'invention.

Conformément à l'invention, pour chaque arbre, on mesure dans deux plans différents, qui sont avantageusement distants d'environ 30% de la longueur totale de l'arbre, la position du centre de rotation de l'arbre dans le plan considéré pour différentes positions angulaires de l'arbre.

A cet effet, on dispose dans chaque plan un couple de comparateurs 20 et 21 fixes dont le palpeur vient en contact avec l'arbre. Pour chaque plan, les deux comparateurs 20 et 21 sont décalés angulairement de 90° par rapport à l'axe du rotor. De plus, les comparateurs 20 et 21 des différents plans de mesure sont tous alignés selon un même plan vertical.

Dans chaque plan de mesure, les deux comparateurs 20 et 21 sont reliés à un dispositif électronique 22 de mémorisation et de commande, connu sous le nom de "mémo-collecteur". Ce dispositif électronique 22 comporte tout d'abord une mémoire destinée à stocker les mesures fournies par les comparateurs 20 et 21 qui sont des comparateurs de type numérique ; par ailleurs ce dispositif électronique 22 comporte un circuit de commande qui déclenche les mesures effectuées par les comparateurs 20 et 21.

Tous les dispositifs électroniques de commande 22 de l'installation sont reliés à une unité de synchronisation 23 qui envoie les ordres de mesures aux dispositifs électroniques 22 qui les retransmettent à l'ensemble comparateurs 20 et 21. L'unité de synchronisation 23 est commandée par un détecteur de la position angulaire de la ligne d'arbres. Ce détecteur est avantageusement un détecteur optique 24 qui est disposé au voisinage de la ligne d'arbres et qui détecte le passage de bandes verticales 25 qui sont fixées sur l'arbre et qui font contraste avec ce dernier.

Avantageusement, on prévoit huit positions angulaires de mesures et l'on dispose donc huit bandes verticales 25 sur l'arbre ; elles sont par exemple constituées par des tronçons de bande adhésive de couleur claire et constituent des repères pour le détecteur optique 23.

Pour procéder au contrôle, et éventuellement au réglage, de la ligne d'arbres, on dépose tous les paliers afin de libérer de la machine de toute contrainte due à d'éventuels défauts de la ligne d'arbres ou à un mauvais alignement des paliers.

Pour limiter les débattements radiaux lors de la rotation de la ligne d'arbres, on peut prévoir un dispositif de butée qui permet une rotation libre de la ligne d'arbres.

Le dispositif de butée peut être constitué par un buton ; on peut également utiliser un des paliers de la ligne d'arbres qui ne sera alors pas démonté.

Pour effectuer les mesures, on met manuellement la ligne d'arbres en rotation à faible vitesse en utilisant l'injection de pivot si elle existe ou en effectuant au préalable un soulèvement du groupe. Les patins du pivot devront être décollés du grain mobile pour éviter un grippage et faciliter la rotation.

Lorsqu'un des repères angulaires constitué par les bandes 25 passe devant le détecteur 24, on lance le début de la mesure en utilisant un déclencheur de l'unité de synchronisation 23.

A chaque tour, le dispositif de synchronisation commande huit mesures correspondant au passage des repères 25.

Avantageusement, on effectue plusieurs rotations, par exemple une dizaine, de manière à déterminer une valeur moyenne pour chaque position angulaire de mesure.

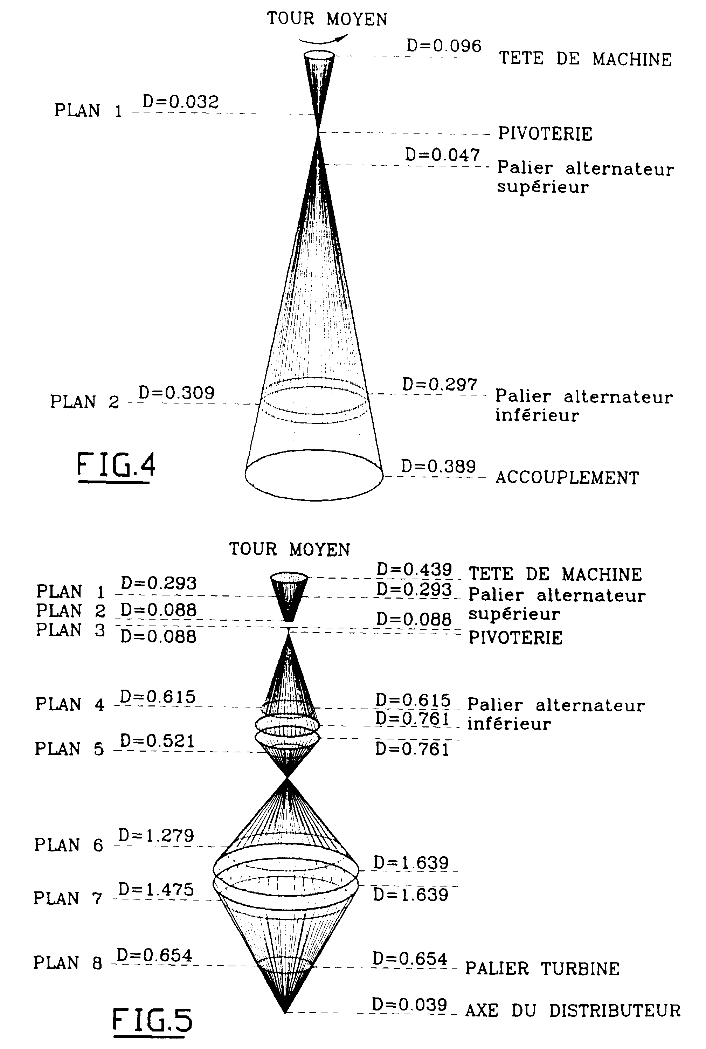

La figure 3 représente le résultat des mesures pour un plan donné. Les différents plans relevés correspondent à la position du centre de rotation de l'arbre au niveau de ce plan pour chacune de ses positions angulaires. Les points gris carrés représentent la valeur moyenne et les points noirs ronds représentent la mesure obtenue pour un des tours de mesures.

En utilisant les résultats obtenus pour chacun des plans de mesures, on détermine l'enveloppe des courbes des trajectoires du centre de rotation de l'arbre sur toute la longueur de celui-ci. Ceci est représenté à la figure 4 où l'on a représenté cette courbe enveloppe pour l'arbre supérieur du groupe.

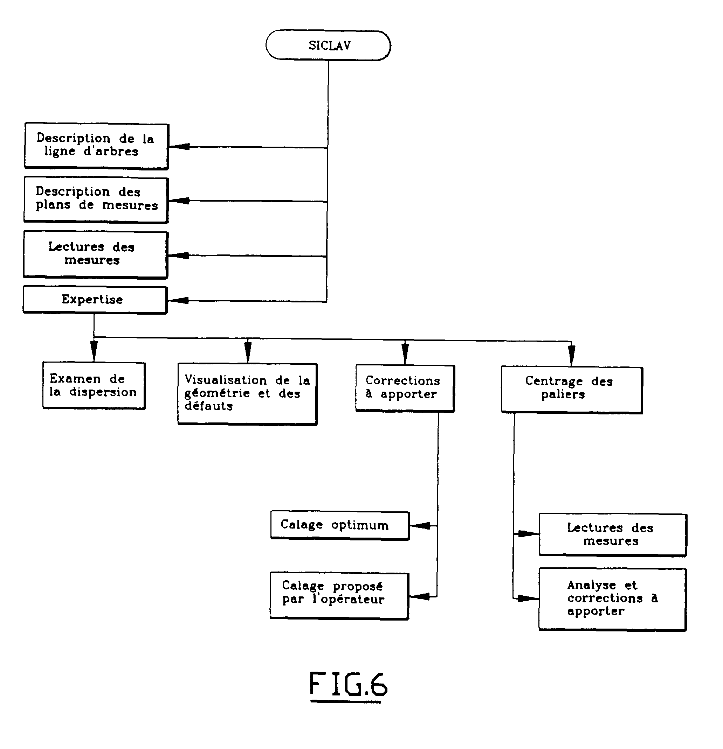

La figure 5 représente cette même courbe enveloppe pour une ligne d'arbres.

Le traitement des données de mesures fournies par les comparateurs est réalisé dans un micro-ordinateur de type PC ; lorsque toutes les mesures sont effectuées, les dispositifs électroniques sont débranchés et leurs mémoires sont lues par micro-ordinateur à l'aide d'un programme spécifique prévu à cet effet. Ensuite, ces valeurs sont traitées par un logiciel de traitement spécifique de manière à déterminer les défauts de la ligne d'arbres et les calages éventuels à effectuer.

L'ensemble des opérations effectuées par ce logiciel spécifique SICLAV est décrit sur la figure 6. Tout d'abord, on introduit des paramètres concernant la structure de la ligne d'arbres et les mesures effectuées. Ces paramètres sont notamment :
- la position du palier, des pivots et des accouplements;
- la sens de rotation ;
- les jeux théoriques de chacun des paliers ;
- les diamètres de calage aux accouplements ainsi qu'au niveau du pivot ;
- la position des plans de mesure et des comparateurs;
- le repère angulaire choisi ;
- le nombre de mesures effectuées par tour de machine.

On effectue alors une lecture des mesures qui sont visualisées. Du fait que les mesures sont répétées pour chaque position angulaire de mesures, on peut afficher à chaque fois les écarts par rapport à la valeur moyenne et l'opérateur pourra à ce moment là supprimer des mesures aberrantes.

Le logiciel effectue alors le traitement des mesures retenues et il peut alors restituer la géométrie de la ligne d'arbres avec les cassures ou autres défauts éventuels. Une animation permet également de mieux visionner l'enveloppe engendrée lors d'une rotation, comme cela est représenté aux figures 4 et 5.

Le micro-ordinateur fournit alors deux types d'informations :
- au niveau de chaque palier : excentration locale de l'arbre par rapport à l'axe réel de rotation;
- pour chaque accouplement : défaut de concentricité.

Si les défauts sont trop importants par rapport au jeu permis pour les paliers, l'opérateur peut demander au programme de calculer des propositions de calage optimales pour redresser la ligne d'arbres. Les excentrations au niveau des paliers ne doivent pas dépasser les jeux théoriques des paliers et la perpendicularité du grain mobile du pivot par rapport à la ligne d'arbres doit être la meilleure possible. Le programme calcule le calage optimal pour rectifier les défauts.

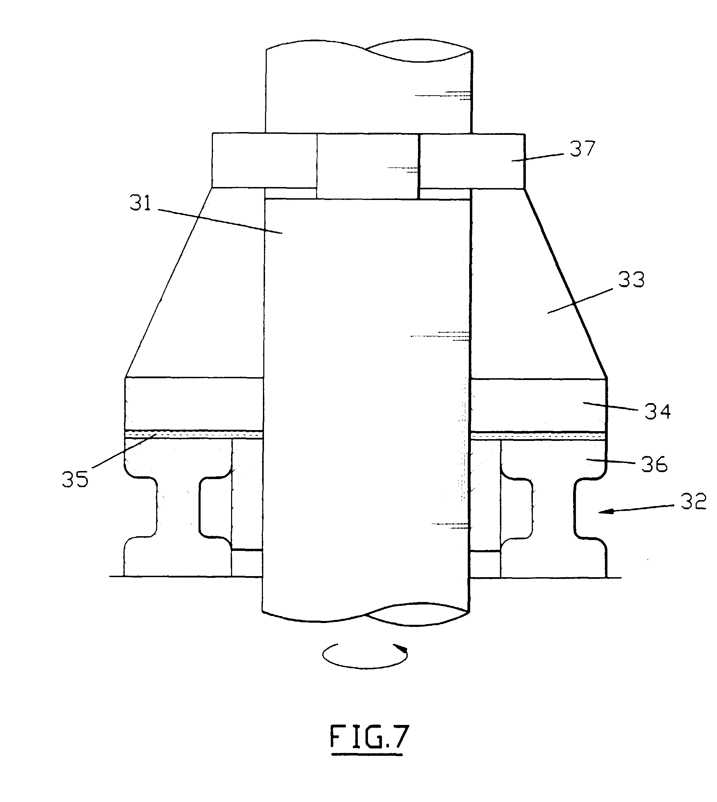

La figure 7 illustre les opérations de calage. On voit sur cette figure l'arbre 31, le pivot 32 et le tourteau de palier 33 qui supporte la glace 34. Un film d'huile 35 est interposé entre la glace 34 et le patin 36 du pivot. L'arbre est fixé au moyen de deux demies clavettes 37.

La zone de calage est la face supérieure des deux demies clavettes. Lorsque le calage désiré est obtenu, on peut remplacer le calage par un usinage de la demie clavette opposée.

Il est également possible, grâce à ce logiciel spécialisé, de juger de l'effet d'un calage autre que celui proposé par le programme en le simulant directement, ce qui permet d'optimiser au mieux les opérations de calage.

Une fois que les opérations de calage sont effectuées, on effectue un nouveau contrôle et, si cela est nécessaire, le calage est affiné.

Ces différentes opérations peuvent être réalisées de manière progressive en désaccouplant tous les arbres et en commençant par régler l'arbre supérieur de l'alternateur. On procède ensuite à l'accouplement de l'arbre suivant, par exemple l'arbre intermédiaire, et l'on recommence le contrôle et le calage éventuel. Enfin, on accouple l'arbre de turbine et l'on effectue encore un contrôle et un réglage.

Les comparateurs peuvent être fixés sur les parties fixes du groupe au moyen de pieds magnétiques; grâce à cette disposition, la mise en place des comparateurs est facilitée.

On voit que l'invention fournit un procédé qui permet de réaliser le contrôle et le réglage éventuel de la ligne d'arbres d'un groupe hydroélectrique en utilisant un dispositif de mesure simple et facile à mettre en place. En particulier, on peut disposer les comparateurs dans les plans les plus favorables ; par exemple on peut disposer les palpeurs des comparateurs sur la soie des paliers ; compte tenu de l'état de surface de ces soies, la précision de mesure est améliorée.

Le gain de temps est très important puisque l'opération de contrôle elle même, c'est-à-dire la phase de mesure et de calcul suivant le démontage des paliers, nécessite environ cinq heures qui se décomposent en quatre heures d'installation du matériel et une heure de mesures. Cette durée est à comparer avec celle nécessaire par exemple pour la méthode des fils à plomb qui est d'environ deux semaines.

La qualité des résultats est nettement supérieure à celle des méthodes connues qui sont très sensibles aux conditions extérieures telles que la température, les courants-d'air, l'instabilité et les erreurs des opérateurs.

Un avantage du procédé selon l'invention qui réalise une mesure dynamique au lieu d'une mesure statique comme dans les procédés de type connu est de connaître la géométrie de la ligne d'arbres en place dans son environnement final. Ainsi, si les supports subissent des déformations, celles-ci sont prises en compte. Ce point est important parce que le contrôle d'un arbre déposé peut donner des résultats différents.

Par ailleurs, le procédé selon l'invention permet d'obtenir directement le défaut de perpendicularité entre la ligne d'arbres et le grain mobile du pivot et l'excentration au niveau des paliers.

L'utilisation d'un logiciel permet à l'opérateur de visualiser la géométrie du groupe. L'utilisation de ce logiciel entraîne également un gain de temps qui permet aussi d'améliorer la productivité des machines puisqu'elles sont remises en service beaucoup plus rapidement.

Le procédé selon l'invention permet d'envisager le contrôle d'une machine pour laquelle durée d'indisponibilité pour l'entretien ne permettait pas d'insérer un contrôle de type connu.

Enfin, le procédé selon l'invention peut être mis en oeuvre facilement par un opérateur ne possédant pas de connaissances spécifiques, par exemple, un contremaître sensibilisé au remontage des lignes d'arbres verticales peut réaliser les opérations de contrôle et de réglage de la géométrie d'une ligne d'arbres.

L'invention permet de modifier la procédure de remontage du groupe.

En effet, dans les procédés actuellement utilisés, on part de la base, c'est-à-dire du génie civil et l'on monte progressivement les arbres en allant vers le haut.

Dans le procédé selon l'invention, on commence par régler le haut du groupe et l'on accouple progressivement les différents arbres. Le procédé selon l'invention permet de faire un montage d'essai des parties fixes en vérifiant que tous les supports de paliers sont bien alignés.

## Revendications

1. Procédé de contrôle et de réglage de la géométrie de la ligne d'arbres d'un groupe hydroélectrique à axe vertical, ledit groupe étant supporté par un pivot, caractérisé en ce que :
- on démonte les paliers (8,9,10) de la ligne d'arbres (3,4,5) de manière à permettre une rotation libre de la ligne d'arbres ;
- pour chaque arbre (3,4,5), on détermine, dans deux plans horizontaux différents, la position du centre de l'arbre dans le plan considéré pour plusieurs positions angulaires de l'arbre, les positions angulaires respectives de l'arbre étant toutes alignées dans un même plan vertical pour tous les plans de mesure ;
- on détermine, dans chaque plan horizontal, la trajectoire suivie par le centre de l'arbre situé dans ce plan ;
- on détermine, par calcul, l'enveloppe des trajectoires du centre de l'arbre sur toute la longueur de ce dernier ; et
- on calcule les défauts de l'arbre et, éventuellement, les calages à réaliser.

2. Procédé de contrôle et de réglage selon la revendication 1, caractérisé en ce que, pour chaque arbre, les deux plans de mesures sont séparés par une distance égale à au moins 30% de la longueur de l'arbre.

3. Procédé de contrôle et de réglage selon la revendication 1, caractérisé en ce que l'on mesure la position du centre de l'arbre pour huit positions angulaires de ce dernier.

4. Procédé de contrôle et de réglage selon la revendication 1, caractérisé en ce que, pour chaque position angulaire de mesure de l'arbre, on effectue plusieurs mesures et l'on détermine la moyenne desdites mesures.

5. Procédé de contrôle et de réglage selon la revendication 1, caractérisé en ce qu'au moins l'un des plans de mesure est disposé au niveau de la soie d'un palier (8,9,10) et/ou d'un plateau d'accouplement.

6. Procédé de contrôle et de réglage selon la revendication 1, caractérisé en ce que l'on fait tourner lentement l'arbre (3,4,5) et en ce que les mesures sont réalisées pendant la rotation de manière synchrone pour les différents plans de mesure.

7. Procédé de contrôle et de réglage selon la revendication 6, caractérisé en ce que l'arbre (3,4,5) est entraîné manuellement en rotation.

8. Procédé de contrôle et de réglage selon la revendication 1, caractérisé en ce que l'on désaccouple les arbres (3,4,5) et l'on effectue le contrôle et le réglage de l'arbre supérieur (3), on monte l'arbre suivant (5) sur l'arbre supérieur (3) et l'on effectue le contrôle et le réglage de l'ensemble, ces opérations étant répétées jusqu'au contrôle et réglage de l'ensemble des arbres de la ligne d'arbres.

9. Procédé de contrôle et de réglage selon la revendication 1, caractérisé en ce que l'on prévoit un dispositif de butée limitant les débattements radiaux de la ligne d'arbres.

10. Procédé de contrôle et de réglage selon la revendication 9, caractérisé en ce que ledit dispositif de butée est constitué par un buton.

11. Procédé de contrôle et de réglage selon la revendication 9, caractérisé en ce que ledit dispositif de butée est constitué par un palier.

12. Procédé de contrôle et de réglage selon la revendication 1, caractérisé en ce que la mesure de la position du centre de l'arbre est réalisée au moyen de deux comparateurs fixes (20,21) disposés par rapport à l'arbre avec un écartement angulaire de 90°.

13. Procédé de contrôle et de réglage selon la revendication 12, caractérisé en ce que, pour chaque plan de mesure, les deux comparateurs (20,21) sont reliés à un dispositif électronique (22) de mémorisation et de commande des mesures et en ce que chacun desdits dispositifs électroniques (22) de mémorisation est commandé par un dispositif de synchronisation (23) comportant un dispositif (24) de détection de la position angulaire de l'arbre.

14. Procédé de contrôle et de réglage selon la revendication 13, caractérisé en ce que le dispositif (24) de détection de la position angulaire de l'arbre est de type optique.

15. Procédé de contrôle et de réglage selon la revendication 14, caractérisé en ce que l'on dispose sur l'arbre des bandes adhésives verticales (25) formant contraste avec la surface de l'arbre et en ce que ledit dispositif optique (24) est disposé devant l'arbre au niveau desdites bandes.

## Patentansprüche

1. Verfahren zum Steuern und Einstellen der Geometrie des Wellenstrangs einer hydroelektrischen Gruppe mit vertikaler Achse, wobei die Gruppe durch einen Drehzapfen unterstützt ist, dadurch gekennzeichnet, daß:
- die Lager (8, 9, 10) des Wellenstrangs (3, 4, 5) abgenommen werden, um eine freie Drehung des Wellenstrangs zu ermöglichen;
für jede Welle (3, 4, 5) in zwei verschiedenen horizontalen Ebenen die Position des Zentrums der Welle in der jeweiligen Ebene für mehrere Winkelpositionen der Welle bestimmt wird, wobei die jeweiligen Winkelpositionen der Welle für alle Meßebenen in derselben vertikalen Ebene liegen;
- in jeder horizontalen Ebene die Bahn bestimmt wird, der das in dieser Ebene befindliche Zentrum der Welle folgt;
- durch Berechnen die Einhüllende der Bahnen des Zentrums der Welle auf der gesamten Länge dieser letzteren bestimmt wird; und
- der Fehler der Welle und eventuell die auszuführenden Einstellungen berechnet werden.

2. Verfahren zum Steuern und Einstellen nach Anspruch 1, dadurch gekennzeichnet, daß die beiden Meßebenen für jede Welle durch einen Abstand getrennt sind, der wenigstens gleich 30 % der Länge der Welle ist.

3. Verfahren zum Steuern und Einstellen nach Anspruch 1, dadurch gekennzeichnet, daß die Position des Zentrums der Welle für acht Winkelpositionen dieser letzteren gemessen wird.

4. Verfahren zum Steuern und Einstellen nach Anspruch 1, dadurch gekennzeichnet, daß für jede Meßwinkelposition der Welle mehrere Messungen ausgeführt werden und der Mittelwert dieser Meßwerte bestimmt wird.

5. Verfahren zum Steuern und Einstellen nach Anspruch 1, dadurch gekennzeichnet, daß wenigstens eine der Meßebenen auf Höhe eines Lagers (8, 9, 10) und/oder einer Kupplungsplatte angeordnet ist.

6. Verfahren zum Steuern und Einstellen nach Anspruch 1, dadurch gekennzeichnet, daß die Welle (3, 4, 5) langsam gedreht wird und daß die Messungen während der Drehung synchron für die verschiedenen Meßebenen ausgeführt werden.

7. Verfahren zum Steuern und Einstellen nach Anspruch 6, dadurch gekennzeichnet, daß die Welle (3, 4, 5) manuell zu Drehungen angetrieben wird.

8. Verfahren zum Steuern und Einstellen nach Anspruch 1, dadurch gekennzeichnet, daß die Wellen (3, 4, 5) voneinander entkoppelt werden und daß die Steuerung und die Einstellung der oberen Welle (3) ausgeführt wird, daß die folgende Welle (5) an der oberen Welle (3) angebracht wird und die Steuerung und die Einstellung dieser Gesamtheit ausgeführt wird, wobei die Operationen bis zur Steuerung und Einstellung der Gesamtheit der Wellen des Wellenstrangs wiederholt werden.

9. Verfahren zum Steuern und Einstellen nach Anspruch 1, dadurch gekennzeichnet, daß eine Anschlagvorrichtung vorgesehen ist, die die radialen Ausschläge des Wellenstrangs begrenzt.

10. Verfahren zum Steuern und Einstellen nach Anspruch 9, dadurch gekennzeichnet, daß die Anschlagvorrichtung durch eine Strebe gebildet ist.

11. Verfahren zum Steuern und Einstellen nach Anspruch 9, dadurch gekennzeichnet, daß die Anschlagvorrichtung durch ein Lager gebildet ist.

12. Verfahren zum Steuern und Einstellen nach Anspruch 1, dadurch gekennzeichnet, daß die Messung der Position des Zentrums der Welle mittels zweier fester Komparatoren (20, 21) erfolgt, die in bezug auf die Welle in einem Winkelabstand von 90° angeordnet sind.

13. Verfahren zum Steuern und Einstellen nach Anspruch 12, dadurch gekennzeichnet, daß die zwei Komparatoren (20, 21) für jede Meßebene mit einer elektronischen Vorrichtung (22) zum Speichern und Steuern der Meßwerte verbunden sind und daß jede der elektronischen Speichervorrichtungen (22) durch eine Synchronisationsvorrichtung (23) gesteuert wird, die eine Vorrichtung (24) für die Erfassung der Winkelposition der Welle enthält.

14. Verfahren zum Steuern und Einstellen nach Anspruch 13, dadurch gekennzeichnet, daß die Vorrichtung (24) für die Erfassung der Winkelposition der Welle vom optischen Typ ist.

15. Verfahren zum Steuern und Einstellen nach Anspruch 14, dadurch gekennzeichnet, daß an der Welle vertikale Klebebänder (25) angeordnet werden, die mit der Oberfläche der Welle einen Kontrast bilden, und daß die optische Vorrichtung (24) vor der Welle auf Höhe der Bänder angeordnet ist.

## Claims

1. Method for checking and adjusting the geometry of a line of shafting of a vertically axed hydroelectric unit, which is supported by a pivot, characterized in that:
- the bearings (8, 9, 10) of the line of shafting (3, 4, 5) is dismantled, so as to permit a free rotation of the line of shafting,
- for each shaft (3, 4, 5), determination takes place in two different horizontal planes of the position of the centre of the shaft in the considered plane for several angular positions of the shaft, the respective angular positions of the shaft all being aligned in the same vertical plane for all the measurement planes,
- determination takes place in each horizontal plane of the trajectory followed by the centre of the shaft located in said plane,
- determination takes place by calculation of the envelope of the trajectories of the centre of the shaft over the entire length of the latter and
- a calculation is made of the defects of the shaft and possibly the settings to be made.

2. Checking and adjustment method according to claim 1, characterized in that, for each shaft, the two measurement planes are separated by a distance equal to at least 30% of the shaft length.

3. Checking and adjustment method according to claim 1, characterized in that the position of the centre of the shaft is measured for eight angular positions of the latter.

4. Checking and adjustment method according to claim 1, characterized in that, for each angular shaft measurement position, several measurements are performed and the mean value of said measurements is determined.

5. Checking and adjustment method according to claim 1, characterized in that at least one of the measurement planes is level with the tongue of a bearing (8, 9, 10) and/or a coupling plate.

6. Checking and adjustment method according to claim 1, characterized in that the shaft (3, 4, 5) is slowly turned and in that the measurements are performed during the rotation in a synchronous manner for the different measurement planes.

7. Checking and adjustment method according to claim 6, characterized in that the shaft (3, 4, 5) is manually rotated.

8. Checking and adjustment method according to claim 1, characterized in that the shafts (3, 4, 5) are uncoupled and the checking and adjustment of the upper shaft (3) take place, the following shaft (5) is mounted on the upper shaft (3) and the checking and adjustment of the assembly take place, said operations being repeated until all the shafts of the line of shafting have been checked and adjusted.

9. Checking and adjustment method according to claim 1, characterized in that there is an abutment device limiting the radial displacements of the line of shafting.

10. Checking and adjustment method according to claim 9, characterized in that said abutment device is constituted by a buffer.

11. Checking and adjustment method according to claim 9, characterized in that said abutment device is constituted by a bearing.

12. Checking and adjustment method according to claim 1, characterized in that the measurement of the position of the centre of the shaft takes place by means of two fixed comparators (20, 21) arranged with respect to the shaft with an angular clearance of 90°.

13. Checking and adjustment method according to claim 12, characterized in that, for each measurement plane, the two comparators (20, 21) are connected to an electronic storage and measurement control device (22) and in that each of said electronic storage devices (22) is controlled by a synchronization device (23) incorporating a device (24) for detecting the angular position of the shaft.

14. Checking and adjustment method according to claim 13, characterized in that the device (24) for detecting the angular position of the shaft is of the optical type.

15. Checking and adjustment method according to claim 14, characterized in that on the shaft are placed vertical adhesive tapes (25) forming a contrast with the surface of the shaft and in that said optical device (24) is placed in front of the shaft level with said tapes.
